# EUROPEAN PATENT SPECIFICATION

(11) **EP 2 111 524 B1**
(45) Date of publication and mention of the grant of the patent: **23.03.2011**
(21) Application number: 07862342.8
(22) Date of filing: 28.11.2007
(51) Int. Cl.: F28F 19/06

(54) **WEAR RESISTANT MATERIALS IN THE DIRECT PROCESS**
VERSCHLEISSFESTE MATERIALIEN IM DIREKTVERFAHREN
MATÉRIAUX RÉSISTANTS À L'USURE DANS LE PROCÉDÉ DIRECT

(30) Priority: 17.01.2007 US 880834 P
(43) Date of publication of application: 28.10.2009
(73) Proprietor: Dow Corning Corporation, Midland MI 48686-0994 (US)
(72) Inventor: Cleland Host, Jonathan, J., Midland, MI 48640 (US); Kroupa, Michael George, Sip, Suzhou 215021 (CN); Molloy, Jonathan, Midland, Michigan 48640 (US); Pritchard, Ryan, T., Midland, MI 48640 (US); Schrauben, Mark, Alma, MI 48801 (US)
(74) Representative: Gillard, Richard Edward
(86) International application number: PCT/US2007/024591
(87) International publication number: WO 2008/088465

(56) References cited:
- EP-A- 0 352 482
- EP-A- 0 684 070
- WO-A-99/14400
- DE-A1- 3 230 590
- FR-A- 2 307 214
- FR-A- 2 379 786
- JP-A- 60 080 055
- JP-A- 61 110 895
- JP-A- 62 123 011

## Description

### CROSS-REFERENCE TO RELATED APPLICATIONS

NONE

### BACKGROUND OF THE INVENTION

The present invention relates to a direct process reactor comprising at least one heat exchange element. The heat exchange element comprises a heat exchange element with a wear resistant coating on the surface of at least a portion of its surface. The wear resistant coating forms strong bonds to the heat exchange element and has a hardness grater that 50 Rockwell C and wherein the wear resistant coating is obtainable by a two-step process comprising, a first step of an application of a cloth or a suspension formulated for applying hard particles distributed throughout a matrix, and a second step of forming a metallurgical bond by heating. Such a coating can survive the physical and chemical environment present in the direct process.

The production of halosilanes typically involves the reaction of silicon powder with a reactant gas, typically either methyl chloride or hydrogen chloride (often called the "direct process"). This reaction is exothermic and usually requires the removal of heat that is generated. The heat is typically removed using heat transfer fluid flowing through heat transfer tubes that are in direct contact with the silicon powder and reaction gases at high temperature. These heat transfer elements are subject to significant wear due to several factors including high temperature, temperature cycling, hostile chemical environment, and the erosive nature of silicon powder due to its hardness.

The heat transfer elements used in the direct process are typically made of carbon steel. Because of the above cited environmental factors, these carbon steel heat transfer elements have a limited life. As such, the direct process reaction needs to be shut down for the replacement of the heat transfer elements, thus, there is a significant down time and expense.

Attempts have been made to increase the wear resistance of these heat transfer elements using coatings, typically involving a hard material such as tungsten carbide dispersed within a matrix of a suitable material. These coatings are typically applied using techniques such as thermal sprays and have been used with limited success.

However, these coatings are often prone to spalling and delamination. Moreover, spray techniques are often difficult to apply on the internal surfaces and complex geometries that are sometimes involved with such heat transfer elements.

Attempts have also been made to protect heat transfer elements using weld-overlay techniques. The weld-overlay coatings of the prior art have also often provided only limited success because the materials used do not provide the degree of wear resistance required to result in substantial increase in the useful life of the heat transfer element.

Because of the environment the heat transfer elements encounter in the direct process, it is difficult to predict which coatings will be effective. Specifically, because the hardness of silicon powder is difficult to measure precisely, it is difficult to predict the coating hardness necessary for protection. Similarly, because the environment contains such chemically aggressive materials, it is difficult to predict which materials will survive. Additionally, because of the frequent thermal cycling and the stresses caused by the different coefficients of thermal expansion of the thermal transfer element and the coating, it is difficult to predict those that will adhere sufficiently. Finally, the requirements that proved necessary for this application were totally unexpected as coatings that survived other erosive environments, such as thermally sprayed tungsten carbide, were not effective in this environment. EP 0 684 070 discloses a fluidized-bed reactor having the features in the preamble of claim 1 for the reaction of silicon metalloid with a hydrogen halide to form halosilanes, comprising the coating of the heat exchange elements positioned within the cavity of the reactor with a tungsten carbide coating.

JP 61 110895 discloses a method that prevents the erosion of tubes of a heat exchanger wherein the titled tube is composed of a material alloy tube, on which surface an oxide layer composed of Cr and another above one kind of element.

EP0 0 35 2 482 discloses a steam generating plant with heat exchanger tubes which are provided with surface protection wherein the heat exchanger tubes have laser heat-treated hard surface layers.

FR 2 307 214 discloses alloy coated boiler tubes and a method of coating boiler tubes.

FR 2 379 706 discloses a fluidised bed reactor containing a heat exchange apparatus.

The present inventors have now discovered that coatings with a high hardness, sufficient chemical resistance, and high bond strength achieved by metallurgical bonds can protect heat exchange elements used in a reactor producing halosalines.

### BRIEF SUMMARY OF THE INVENTION

The present invention relates to a direct process reactor comprising at least one heat exchange element. The heat exchange element comprises a heat exchange element with a wear resistant coating on the surface of at least a portion of its surface. The wear resistant coating forms strong metallurgical bonds to the heat exchange element, has a hardness greater than 50 Rockwell C and wherein the wear resistant coating is obtainable by a two-step process comprising, a first step of an application of a cloth or a suspension formulated for applying hard particles distributed throughout a matrix, and a second step of forming a metallurgical bond by heating. Such a coating can survive the physical and chemical environment present in the direct process.

### BRIEF DESCRIPRTION OF THE DRAWINGS

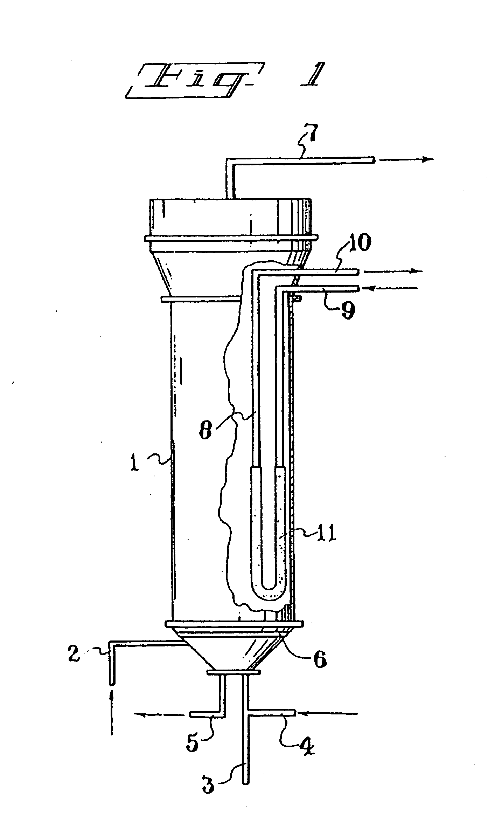

Figure 1 is a schematic representation of a fluidized bed reactor incorporating the heat exchange elements of the present invention

### DETAILED DESCRPTION OF THE INVENTION

The present invention is an improvement to a fluidized-bed reactor for reacting silicon metal powder with an organic halide or a hydrogen halide to produce halosilanes. This reactor typically comprises a reaction chamber and, within the reaction chamber, at least one heat exchange element for conveying a heat transfer medium. The present invention is characterized in that a coating having a high hardness and high bond strength is formed on at least a portion of the heat exchange element to survive the physical and chemical environment of the direct process.

In Figure 1, the fluidized-bed reactor comprises shell **1**, having organic or halogen halide inlet **2**, particulate silicon inlet **3**, nitrogen gas inlet **4** and spent-bed outlet **5.** Inlets **2-4** and outlet **5** are separated from the reaction chamber of the reactor by distributor plate **6.** Products, by-products and unreacted gases are removed from this reactor through product outlet **7.** Positioned within shell **1** is heat exchange element **8**. Connected to heat exchange element **8** is heat exchange fluid inlet **9** and heat exchange fluid outlet **10**. The lower section of heat exchange element **8** has applied to it a coating according to the present invention **11**.

The fluidized-bed reactor itself can be of made of standard materials for fabricating reactors suitable for contacting particulate silicon with a halogen halide. The reactor can be fabricated, for example, from carbon steel or stainless steel.

Halosilanes are typically produced in the reactor by reacting silicon powder with a reactant gas, typically either an organic halide or a hydrogen halide. The particulate silicon can be an essentially pure silicon such as metallurgical grade silicon or it can be silicon alloyed with another metal such as copper, phosphorous, iron and the like. The organic halide can be essentially any organic group substituted with a halogen atom. The organic group typically contains 1-20 carbon atoms and can be, for example, alkyl groups, aryl groups, alkenyl groups and the like, alternatively 1-6 carbon atoms and alternatively lor 2 carbon atoms. The halide substituent can be a bromide, chloride, fluoride or iodide. The hydrogen halide can be hydrogen bromide, hydrogen chloride, hydrogen fluoride or hydrogen iodide. Preferred is when the fluidized-bed reactor is used to react metallurgical grade silicon with methyl chloride or hydrogen chloride. By "metallurgical grade" silicon, it is meant a composition comprising at least 95 weight percent silicon. Such compositions are well known to those skilled in the art.

Positioned within the fluidized-bed reactor is one or more heat exchange elements 8 having a coating of the invention on at least a portion of the external surface of the heat exchange element that contacts the particulate silicon and organic or hydrogen halide 11. The design, number and position of the heat exchange elements are not critical to the functioning of the present invention. Such design, number and position will depend on the diameter of the fluidized-bed reactor and the cooling surface required for its contents.

An example of a useful, but not essential, design for heat exchange elements 8 is a "U" shaped tube. The reactor can contain one or more such "U" shaped tubes as heat exchange elements. These are shown, for example, in EP684070 and EP776692. Another example of a useful design for the heat exchange element comprises one or more heat transfer coils which are positioned in or near the reaction medium. Yet another design for the heat exchange element is that described in US Patent No. 4,176,710
In this design, a heat transfer pipe is immersed in the fluidized bed in which the end facing against the primary direction of the gas flow has a conical restriction.

These heat exchange elements can be formed from standard materials suitable for use in fluidized-bed reactors for contacting particulate silicon with an organic or halogen halide. For example, carbon steel or stainless steel can be utilized.

The present inventors have discovered that to be effective, at least a portion of heat exchange element must be coated with a coating of the present invention. The coating composition used herein must meet several criteria. First, the coating must be hard enough to withstand the continuous impingement of silicon particles that the heat exchange element will encounter in the reactor. This impingement is caused by the extremely turbulent flow necessary for the direct process to be efficient. Typically, this flow is caused by various means used to agitate the ingredients. Typically, the coating must have a hardness greater than 50 Rockwell C to survive in this environment. Alternatively, the coating can have a hardness greater than 55 Rockwell C and alternatively the coating can have a hardness greater than 60 Rockwell C.

Secondly, the coating must have sufficient bond strength to remain adhered to the heat exchange element. This is especially difficult because of the frequent thermal cycling which causes stresses due to the different coefficients of thermal expansion of the heat exchange element and the coating. When there is insufficient adhesion, the coating can delaminate resulting in the heat exchange element itself being exposed to the harsh environment. Alternatively, the coating can crack or create voids which allow the harsh environment to degrade the heat exchange element. To prevent this, the inventors have discovered that the coating should be metallurgically bonded to the heat exchange element or bonded in such a manner to achieve equivalent bond strength. Typically, this results in a coating with a bond strength greater than 200 MPa, alternatively greater than 300 MPa and alternatively greater than 400 MPa.

Finally, this type of coating has sufficient chemical resistance to avoid appreciable degradation in the chemical environment of the direct process. By "appreciable degradation" it is meant that in the direct process environment comprising HCl, chlorosilanes, silicon powder and H₂ at temperatures in excess of 300 degrees C it will not cause substantial wear to the heat exchange element.

One type of coating included in this invention consists of hard particles such as tungsten carbide distributed throughout a matrix that is metallurgically bonded to the heat transfer surface. This provides very strong bond and prevents delamination. This is typically at least a 2 step process in which the initial coating application may be applied by one of several methods. These methods and include the application of a specially formulated cloth, or application of a specially formulated suspension. In these cases a second step is required where the metallurgical bond is formed by fusing the coating to the substrate by a method such as heating in a furnace, heating in a vacuum furnace, heating using induction, heating using high-density infrared heat, or heating using a direct flame.

One example of this process is described in US Patent 3,743,556.

In this process, a film or sheet of a mixture of an organic binder and a filler which is wetted by the metallic matrix in the molten state is placed upon a surface or portion thereof of a substrate. A layer of matrix metal having a solidus temperature lower than the substrate and the filler is placed contiguous to the film or sheet of the filler to produce an assembly. The assembly is heated to at least the solidus of the matrix metal and below the solidus temperatures of the substrate and filler and above the decomposition temperature of the binder. On heating, the molten metal infiltrates or infuses into the filler layer. Upon cooling, a thin coating of the metallic matrix filled with the filler is formed.

Wear resistant coatings containing tungsten carbide as described above are provided by several suppliers. These include Kennametal (trade name is Conforma Clad), Innobraze GmbH (trade name BrazeCoat), and Gremada Industries (trade name LaserCarb).

Another type of coating according to the present invention is applied by a paint system. This process is described, for example, in US Patent 6,649,682

In this process, hardfacing particles and braze-alloy particles are made into separate paints. The hardfacing particle layer is first "painted" over the area of metal needing protection. Over that, a layer of braze is "painted." The surface thus coated is heated in a furnace in an inert atmosphere to a temperature that is above the melting (liquidus) temperature of the braze alloy. The braze alloy then infiltrates down into the layer of hardfacing particles and brazes (metallurgically bonds) them into a composite of hard particles in a matrix of braze alloy onto the substrate metal. In another method described in the patent, a layer of adhesive is applied to a metal substrate, and hardfacing particles are applied to that adhesive layer. After drying, another layer of adhesive is applied over the adhered hard particles. Braze powder is then applied to the layer of wet adhesive thus forming a layer of braze particles in juxtaposition to the layer of hard particles. Heating in an inert atmosphere then causes metallurgical fusion, which produces a composite of hard particles in a matrix of braze metallurgically bonded to the substrate metal. In yet another method described in the patent, a hardfacing alloy powder containing precipitated intermetallic hard compounds is made into a paint and applied to the surface being protected. After drying, it is then heated in an inert atmosphere to a temperature above the solidus of the hardfacing alloy to form a fully dense coating of the hardfacing alloy metallurgically bonded to the substrate. In another method described in the patent, hardfacing particles and a hardfacing braze alloy powder are made into a paint and applied to the surface being protected. It is then dried and heated in an inert atmosphere to a temperature above the solidus of the hardfacing alloy to effect metallurgical bonding of hardfacing particles to the substrate by the hardfacing alloy.

## Claims

1. A direct process reactor comprising a reaction chamber for the preparation of halosilanes by the reaction of powdered silicon with either a hydrogen halide or an organic halide and at least one heat exchange element for conveying a heat transfer medium, the heat exchange element being positioned in the reaction chamber of the direct process reactor, **characterized in that** the heat exchange element has a wear resistant coating on at least a portion of its surface, wherein the wear resistant coating metallurgically bonds to the heat exchange element, has a hardness greater that 50 Rockwell C, comprises hard particles distributed throughout a matrix and wherein the wear resistant coating is obtainable by a two- step process comprising, a first step of an application of a cloth or a suspension formulated for applying hard particles distributed throughout a matrix, and a second step of forming a metallurgical bond by heating.

2. The direct process reactor of claim 1 wherein the wear resistant coating has a bond strength greater than 200 MPa.

3. The direct process reactor of claim 1 wherein the wear resistant coating can withstand an environment of HCl, chlorosilanes, silicon powder and H₂ at temperatures in excess of 300 degrees C without appreciable degradation.

4. A direct process for the production of halosilanes comprising reacting powdered silicon with an organic halide or a hydrogen halide within a direct process reactor as claimed in any one of claims 1 to 3.

## Patentansprüche

1. Direktsynthesereaktor, der eine Reaktionskammer für die Herstellung von Halogensilanen durch Reaktion von pulverförmigem Silicium mit entweder einem Halogenwasserstoff oder einem organischen Halogenid und mindestens ein Wärmeaustauschelement zur Beförderung eines Wärmeübertragungsmediums aufweist, wobei das Wärmeaustauschelement in der Reaktionskammer des Direktsynthesereaktors angeordnet ist, **dadurch gekennzeichnet, dass** das Wärmeaustauschelement eine verschleißfeste Beschichtung auf mindestens einem Teil seiner Oberfläche aufweist, wobei die verschleißfeste Beschichtung metallurgisch an das Wärmeaustauschelement gebunden ist, eine Härte von größer als 50 Rockwell C aufweist, Hartteilchen enthält, die innerhalb einer Matrix verteilt sind, und wobei die verschleißfeste Beschichtung durch ein zweistufiges Verfahren erhältlich ist, das einen ersten Schritt des Anwendens eines Tuchs oder einer Suspension, die formuliert sind, um Hartteilchen, die innerhalb einer Matrix verteilt sind, aufzubringen, und einen zweiten Schritt des Formens einer metallurgischen Bindung durch Erwärmen umfasst.

2. Direktsynthesereaktor nach Anspruch 1, wobei die verschleißfeste Beschichtung eine Bindungsfestigkeit von größer als 200 MPa aufweist.

3. Direktsynthesereaktor nach Anspruch 1, wobei die verschleißfeste Beschichtung einer Umgebung aus HCl, Chlorsilanen, Siliciumpulver und H₂ bei Temperaturen oberhalb von 300°C ohne merkliche Beschädigung standhalten kann.

4. Direktsynthese für die Herstellung von Halogensilanen, die Umsetzen von pulverförmigem Silicium mit einem organischen Halogenid oder Halogenwasserstoff innerhalb eines Direktsynthesereaktors wie in einem der Ansprüche 1 bis 3 beansprucht umfasst.

## Revendications

1. Réacteur pour procédé direct comprenant une chambre de réaction pour la préparation d'halogénosilanes par réaction de silicium en poudre avec soit un halogénure d'hydrogène soit un halogénure organique et au moins un élément échangeur de chaleur pour convoyer un milieu de transfert de chaleur, l'élément échangeur de chaleur étant positionné dans la chambre de réaction du réacteur pour procédé direct, **caractérisé en ce que** l'élément échangeur de chaleur a un revêtement résistant à l'usure sur au moins une partie de sa surface, dans lequel le revêtement résistant à l'usure est métallurgiquement lié à l'élément échangeur de chaleur, a une dureté supérieure à 50 Rockwell C, comprend des particules dures distribuées dans une matrice et dans lequel le revêtement résistant à l'usure peut être obtenu par un procédé en deux étapes comprenant une première étape d'application d'une étoffe ou d'une suspension formulée pour appliquer des particules dures distribuées dans une matrice, et une deuxième étape de formation d'une liaison métallurgique par chauffage.

2. Réacteur pour procédé direct selon la revendication 1, dans lequel le revêtement résistant à l'usure a une force de liaison supérieure à 200 MPa.

3. Réacteur pour procédé direct selon la revendication 1, dans lequel le revêtement résistant à l'usure peut supporter un environnement de HCl, de chlorosilanes, de poudre de silicium et de H₂ à des températures dépassant 300°C sans dégradation appréciable.

4. Procédé direct pour la production d'halogénosilanes comprenant la réaction de silicium en poudre avec un halogénure organique ou un halogénure d'hydrogène à l'intérieur d'un réacteur pour procédé direct tel que revendiqué dans l'une quelconque des revendications 1 à 3.
